Europäisches Patentamt

European Patent Office

Office européen des brevets

(19)

(11) Veröffentlichungsnummer : **0 330 643 B1**

# EUROPÄISCHE PATENTSCHRIFT

(12)

(45) Veröffentlichungstag der Patentschrift :
**29.01.92 Patentblatt 92/05**

(51) Int. Cl.$^5$ : **B60C 11/04**

(21) Anmeldenummer : **89890009.7**

(22) Anmeldetag : **12.01.89**

(54) **Laufflächenprofil für einen Fahrzeugluftreifen.**

(30) Priorität : **24.02.88 AT 456/88**

(43) Veröffentlichungstag der Anmeldung :
**30.08.89 Patentblatt 89/35**

(45) Bekanntmachung des Hinweises auf die
Patenterteilung :
**29.01.92 Patentblatt 92/05**

(84) Benannte Vertragsstaaten :
**AT CH DE FR IT LI SE**

(56) Entgegenhaltungen :
**EP-A- 0 073 966**
**GB-A- 577 521**
**LU-A- 82 226**

(56) Entgegenhaltungen :
**PATENT ABSTRACTS OF JAPAN, Band 9, Nr.
70 (M-367)[1793], 30. März 1985; & JP-A-59 202
911 (SUMITOMO GOMU KOGYO) 16-11-1984**
**PATENT ABSTRACTS OF JAPAN, Band 8, Nr.
37 (M-277)[1474], 17. Februar 1984; & JP-A-58
194 605 (SUMITOMO GOMU KOGYO) 12-
11-1983**

(73) Patentinhaber : **Semperit Reifen
Aktiengesellschaft
Wienersdorferstrasse 20-24
A-2514 Traiskirchen (AT)**

(72) Erfinder : **Diensthuber, Franz
Siebenhauser Strasse 1
A-2544 Schönau (AT)**

(74) Vertreter : **Vinazzer, Edith
Semperit Reifen Aktiengesellschaft
Patentabteilung Wienersdorferstrasse 20-24
A-2514 Traiskirchen (AT)**

## Beschreibung

Die Erfindung betrifft ein Laufflächenprofil für einen Fahrzeugluftreifen, insbesondere für den Wintereinsatz, mit Profilelementen, wie Blöcke oder Rippen, die jeweils eine Vielzahl von eng beabstandeten, in bzw. im wesentlichen in Profilquerrichtung verlaufende Feineinschnitte aufweisen, wobei im Laufflächen mittelbereich zumindest eine in Umfangsrichtung verlaufende mittlere Rippe vorgesehen ist, die in Profilquerrichtung nur durch Feineinschnitte gegliedert ist. Ein Laufflächenprofil der genannten Art ist beispielsweise aus der DE-A 3028112 bekannt.

Fahrzeugluftreifen mit derartigen Laufflächenprofilen haben sich in den letzten Jahren als Winterreifen gut bewährt. Gegenüber der in früheren Jahren weitverbreiteten Ausgestaltung von Winterreifen mit grobstolligen und grobstrukturierten Laufflächenprofilen konnte durch die nun allgemein bekannte "Lamellentechnik", d.h., das Teilen von Profilelementen in Querrichtung durch sehr schmale Feineinschnitte, eine wesentliche Verbesserung der Wintertauglichkeit, insbesondere was Naßgriff, Eisgriff oder Schneegriff betrifft, erzielt werden.

Auf vereister und verschneiter Fahrbahn, insbesondere auf Bergstraßen, ist es wesentlich, eine gute Übertragung der Antriebskraft auf den Untergrund zu erzielen. Bei sich durchdrehenden Reifen kann keine Traktionskraft mehr übertragen werden. Durch den bei PKW Reifen im allgemeinen geringeren Aufstandsdruck im Scheitel ist vor allem dort die Laufflächenprofilgestaltung von Bedeutung, um gute Griffeigenschaften und damit eine gute Übertragung von Traktionskräften zu erzielen. Diesbezüglich sind die bekannten Profilausgestaltungen noch verbesserungswürdig.

Hier setzt nun die Erfindung ein, deren Aufgabe darin besteht, ein Laufflächenprofil der eingangs genannten Art hinsichtlich der Übertragung von Antriebskräften, insbesondere auf vereistem und verschneitem Untergrund, zu verbessern.

Gelöst wird die gestellte Aufgabe erfindungsgemäß dadurch, daß der durchschnittliche Normalabstand dieser Feineinschnitte der mittleren Rippe um mindestens 15% geringer ist, als der durchschnittliche Normalabstand der in den Profilelementen der Laufflächenseitenbereiche vorgesehenen und innerhalb dieser Profilelemente benachbarten Feineinschnitte.

Durch die erfindungsgemäßen Maßnahmen wird ein Laufflächenprofil geschaffen, mit welchem insbesondere auf vereister und verschneiter Fahrbahn eine gegenüber bekannten Laufflächenprofilen signifikant bessere Übertragung von Antriebskräften erzielt wird. Dies läßt sich insbesondere dadurch erklären, daß im Mittelbereich der Lauffläche die Wasser- bzw. Schneeableitung bei Traktion gegenüber den bekannten Ausgestaltungen wesentlich verbessert wurde.

Besonders vorteilhafte Ausgestaltungen der Erfindung sind in den Unteransprüchen enthalten.

Hiebei ist gemäß einer bevorzugten Ausführungsform der Erfindung der durchschnittliche Normalabstand der Feineinschnitte in der mittleren Rippe um mindestens 20%, vorzugsweise um etwa 25%, geringer als der durchschnittliche Normalabstand der Feineinschnitte in den Laufflächenseitenbereichen.

Bei einer ebenfalls bevorzugten Ausführungsform der Erfindung ist eine einzige mittlere Rippe entlang der Mittellinie angeordnet.

Es ist weiters von Vorteil, wenn die in der mittleren Rippe vorgesehenen Feineinschnitte zur Mittellinie unter einem Winkel $\alpha$ von 15 bis 45° verlaufen.

Für ein gutes Verhalten beim Bremsen auf naßem, verschneitem oder eisigem Untergrund ist es günstig, wenn seitlich der mittleren Rippe zumindest je eine Blockreihe angeordnet ist, wobei sowohl die die Blöcke in Umfangsrichtung voneinander trennenden Quernuten als auch die innerhalb der Blöcke angeordneten Feineinschnitte zur Mittellinie geneigt verlaufen, wobei innerhalb einer Blockreihe die Neigung von Feineinschnitten und Quernuten im wesentlichen gleich ist.

Eine sehr gute Abstimmung der Griffeigenschaften bei Traktion und beim Bremsen läßt sich dann vorteilhaft erreichen, wenn, über die Laufflächenbreite betrachtet, sowohl die Quernuten als auch die Feineinschnitte kontinuierlich bzw. im wesentlichen kontinuierlich und entlang von schwach S-förmig gekrümmten Kurven verlaufen.

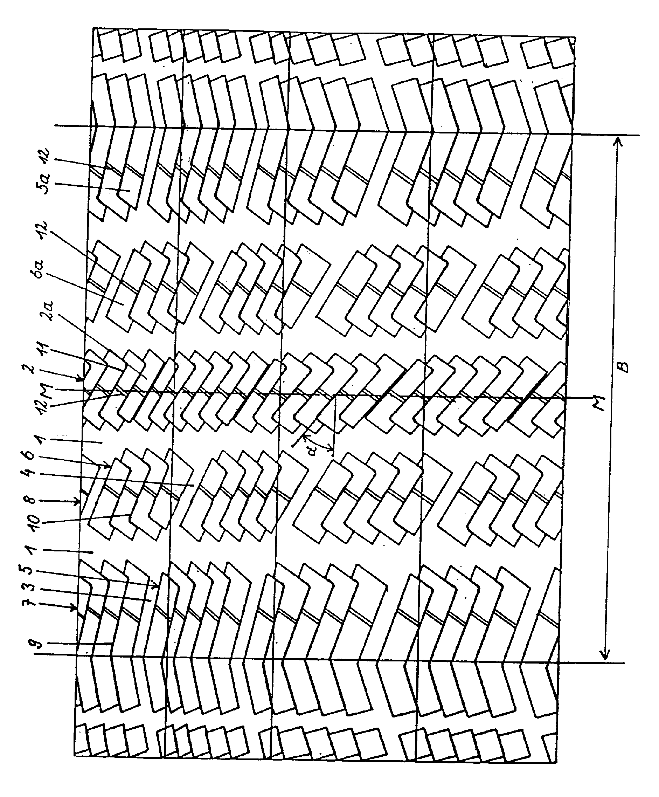

Weitere Merkmale, Vorteile und Einzelheiten der Erfindung werden nun anhand der Zeichnung, die ein Ausführungsbeispiel des erfindungsgemäßen Laufflächenprofiles darstellt, näher beschrieben. Hiebei ist in der einzigen Zeichnungsfigur eine Draufsicht auf eine Teilabwicklung einer Lauffläche eines Fahrzeugluftreifens dargestellt.

Das Laufflächenprofil gemäß der Zeichnungsfigur ist insbesondere für PKW Winterreifen geeignet. In der nun folgenden Beschreibung wird das Profil über die Breite B betrachtet, die der größten axialen Breite, gemessen in der Bodenaufstandsfläche entspricht, wenn der Reifen Nenndruck und Nennlast ausgesetzt ist. Das Laufflächenprofil besitzt vier in Umfangsrichtung verlaufende und im wesentlichen gerade ausgebildete Umfangsnuten 1. Entlang der Mittellinie M-M ist eine kontinuierlich umlaufende mittlere Rippe 2 vorgesehen, seitlich der Rippe 2 sind in jeder Laufflächenhälfte durch das Anordnen von Quernuten 3, 4 aus Blöcken 5, 6 bestehende Blockreihen 7, 8 gebildet. Die Quernuten 3, 4 haben in jeder Laufflächenhälfte einen kontinuierlichen Verlauf, über die Breite B des Laufflächenprofiles betrachtet, verlaufen die Quernuten 3, 4 entlang einer schwach S-förmig gekrümmten Kurve.

Sowohl die Rippe 2 als auch die Blöcke 5, 6 sind mit einer Anzahl von über die Blockbreite bzw. die Rippenbreite durchgehenden Feineinschnitten 9, 10, 11 versehen. Über die Laufflächenbreite B betrachtet,weisen die Feineinschnitte 9, 10, 11 eine Quererstreckung auf, die im wesentlichen dem schwach S-förmigen Verlauf der Quernuten 3, 4 entspricht. Insbesondere sind die in der Rippe 2 angeordneten Feineinschnitte 11 gegenüber der Mittellinie M-M unter einem Winkel α von 15 bis 45°, bevorzugt 30°, geneigt. Die Feineinschnitte 9, 10, 11 weisen eine Breite ≦ 1 mm auf und teilen die Blöcke 5, 6 bzw. die Rippe 2 in eine Anzahl von Blockelemente 5a, 6a bzw. Rippenelemente 2a.

Die in der Mittelrippe 2 vorgesehenen Feineinschnitte 11 sind über den Gesamtumfang des Laufflächenprofiles betrachtet im wesentlichen gleich beabstandet, wobei der durchschnittliche Normalabstand benachbarter Feineinschnitte 11 um mindestens 15%, vorzugsweise rund 25%, geringer ist, als der durchschnittliche Normalabstand der Feineinschnitte 9, 10 innerhalb der Blöcke 5, 6. Somit ist im Laufflächenmittelbereich nicht nur eine größere Anzahl von Feineinschnitten 11 vorgesehen, sondern die Feineinschnitte 11 folgen auch dichter aufeinander als die Feineinschnitte 9, 10 in den Blöcken 5, 6.

Die Blockelemente 5a, 6a und die Rippenelemente 2a sind zusätzlich noch durch Einschnitte 12 in Querrichtung geteilt.

Es wird darauf verwiesen, daß anstelle der einzigen Mittelrippe im Mittelbereich auch zwei in Umfangsrichtung kontinuierliche Rippen vorgesehen werden können. Der Verlauf der Quernuten 3, 4 in jeder Laufflächenhälfte muß hingegen nicht unbedingt kontinuierlich sein. Auch ist es nicht erforderlich, daß die Feineinschnitte,wie dargestellt, einen im wesentlichen geradlinigen Verlauf aufweisen.

**Patentansprüche**

1. Laufflächenprofil für einen Fahrzeugluftreifen, insbesondere für den Wintereinsatz, mit Profilelementen (2, 5, 6), wie Blöcke (5, 6) oder Rippen (2), die jeweils eine Vielzahl von eng beabstandeten, in bzw. im wesentlichen in Profilquerrichtung verlaufenden Feineinschnitten (9, 10, 11) aufweisen, wobei im Laufflächenmittelbereich zumindest eine in Umfangsrichtung verlaufende mittlere Rippe (2) vorgesehen ist, die in Profilquerrichtung nur durch Feineinschnitte (11) gegliedert ist, dadurch gekennzeichnet, daß der durchschnittliche Normalabstand dieser Feineinschnitte (11) der mittleren Rippe (2) um mindestens 15% geringer ist, als der durchschnittliche Normalabstand der in den Profilelementen (5, 6) der Laufflächenseitenbereiche vorgesehenen und innerhalb dieser Profilelemente (5, 6) benachbarten Feineinschnitte (9, 10).

2. Laufflächenprofil nach Anspruch 1, dadurch gekennzeichnet, daß die Feineinschnitte (9, 10, 11) innerhalb eines Profilelementes (2, 5, 6) jeweils voneinander im wesentlichen gleich beabstandet sind.

3. Laufflächenprofil nach Anspruch 1 oder 2, dadurch gekennzeichnet, daß zumindest die in der mittleren Rippe (2) angeordneten Feineinschnitte (11) als in Profilquerrichtung durchgehende Feineinschnitte ausgebildet ausgebildet sind.

4. Laufflächenprofil nach einem der Ansprüche 1 bis 3, dadurch gekennzeichnet, daß der durchschnittliche Normalabstand der Feineinschnitte (11) in der mittleren Rippe (2) um mindestens 20%, vorzugsweise um etwa 25%, geringer ist als der durchschnittliche Normalabstand der Feineinschnitte (9, 10) in den Laufflächenseitenbereichen.

5. Laufflächenprofil nach einem der Ansprüche 1 bis 4, dadurch gekennzehnet, daß eine einzige mittlere Rippe (2) entlang der Mittellinie (M-M) angeordnet ist.

6. Laufflächenprofil nach einem der Ansprüche 1 bis 5, dadurch gekennzeichnet, daß die in der mittleren Rippe (2) vorgesehenen Feineinschnitte (11) zur Mittellinie (M-M) unter einem Winkel α von 15 bis 45° verlaufen.

7. Laufflächenprofil nach einem der Ansprüche 1 bis 6, dadurch gekennzeichnet, daß seitlich der mittleren Rippe (2) zumindest je eine Blockreihe (7, 8) angeordnet ist, wobei sowohl die die Blöcke (5, 6) in Umfangsrichtung voneinander trennenden Quernuten (3, 4) als auch die innerhalb der Blöcke (5, 6) angeordneten Feineinschnitte (9, 10) zur Mittellinie (M-M) geneigt verlaufen, wobei innerhalb einer Blockreihe (7, 8) die Neigung von Feineinschnitten (9, 10) und Quernuten (3, 4) im wesentlichen gleich ist.

8. Laufflächenprofil nach Anspruch 7, dadurch gekennzeichnet, daß über die Laufflächenbreite (B) betrachtet, sowohl die Quernuten (3, 4) als auch die Feineinschnitte (9, 10) den Blöcke (5, 6) kontinuierlich bzw. im wesentlichen kontinuierlich und entlang von schwach S-förmig gekrümmten Kurven verlaufen.

**Claims**

1. A tread profile for a vehicle tyre, in particular for winter use, comprising profile elements (2, 5, 6), such as blocks (5, 6) or ribs (2), which each comprise a plurality of closely spaced fine indentations (9, 10, 11) extending in or substantially in the transverse direction of the profile, wherein in the central zone of the tread there is arranged at least one central rib (2) which extends in the peripheral direction and which, in the transverse direction of the profile, is structured only by fine indentations (11), characterised in that the average normal spacing between these fine indentations (11) of the central rib (2) is at least 15% smaller than the average normal spacing between the fine indentations (9, 10) which are provided in the profile elements (5, 6) of the side zones of the tread and which adjoin one another within these profile elements (5, 6).

2. A tread profile as claimed in Claim 1, characterised in that the fine indentations (9, 10, 11) within a profile element (2, 5, 6) are in each case substantially equally spaced from one another.

3. A tread profile as claimed in Claim 1 or 2, characterised in that at least those fine indentations (11) arranged in the central rib (2) are formed by fine indentations which extend continuously in the transverse direction of the profile.

4. A tread profile as claimed in one of Claims 1 to 3, characterised in that the average normal spacing between the fine indentations (11) in the central rib (2) is at least 20%, preferably approximately 25%, smaller than the average normal spacing between the fine indentations (9, 10) in the side zones of the tread.

5. A tread profile as claimed in one of Claims 1 to 4, characterised in that one single central rib (2) is arranged along the axis (M-M).

6. A tread profile as claimed in one of Claims 1 to 5, characterised in that the fine indentations (11) provided in the central rib (2) extend at an angle of 15 to 45x to the axis (M-M).

7. A tread profile as claimed in one of Claims 1 to 6, characterised in that at least one respective row of blocks (7, 8) is arranged laterally to the central rib (2), where both the transverse grooves (3, 4) which separate the blocks (5, 6) from one another in the peripheral direction and the fine indentations (9, 10) arranged within the blocks (5, 6) extend obliquely in relation to the axis (M-M), where the inclination of fine indentations (9, 10) and transverse grooves (3, 4) within a row of blocks (7, 8) is substantially the same.

8. A tread profile as claimed in Claim 7, characterised in that, considered over the width of the tread (B), both the transverse grooves (3, 4) and the fine indentations (9, 10) of the blocks (5, 6) extend continuously or substantially continuously and along weakly S-shaped curves.

**Revendications**

1. Profil de bande de roulement pour bandage pneumatique de véhicule, notamment pour son utilisation en hiver, comprenant des éléments profilés (2, 5, 6) tels que des blocs (5, 6) ou des nervures (2) présentant un grand nombre de fines entailles (9, 10, 11) étroitement espacées et orientées dans la direction transversale du profil ou sensiblement dans cette direction, une nervure centrale (2) au moins orientée en direction périphérique étant prévue dans la partie centrale de la bande de roulement et subdivisée, en direction transversale du profil seulement, par de fines entailles (11), caractérisé en ce que l'écartement normal moyen de ces fines entailles (11) de la nervure centrale (2) est au moins inférieur de 15% à l'écartement normal moyen des fines entailles voisines (9, 10) prévues dans les éléments profilés (5, 6) des zones latérales de la bande de roulement et à l'intérieur de ces éléments profilés (5, 6).

2. Profil de bande de roulement selon la revendication 1, caractérisé en ce que les fines entailles (9, 10, 11) sont écartées les unes des autres sensiblement de façon égale à l'intérieur d'un élément profilé (2, 5, 6).

3. Profil de bande de roulement selon la revendication 1 ou 2, caractérisé en ce qu'au moins les fines entailles (11) disposées dans la nervure centrale (2) sont constituées sous forme de fines entailles continues en direction transversale du profil.

4. Profil de bande de roulement selon l'une quelconque des revendications 1 à 3, caractérisé en ce que l'écartement normal moyen des fines entailles (11) de la nervure centrale (2) est inférieur d'au moins 20% et de préférence d'environ 25% à l'écartement normal moyen des fines entailles (9, 10) des zones latérales de la bande de roulement.

5. Profil de bande de roulement selon l'une quelconque des revendications 1 à 4, caractérisé en ce qu'une unique nervure centrale (2) est disposée le long de la ligne médiane (M-M).

6. Profil de bande de roulement selon l'une quelconque des revendications 1 à 5, caractérisé en ce que les fines entailles (11) prévues dans la nervure centrale (2) forment un angle $\alpha$ compris entre 15 et 45° avec la ligne médiane (M-M).

7. Profil de bande de roulement selon l'une quelconque des revendications 1 à 6, caractérisé en ce que sont disposées sur les côtés de la nervure centrale (2) au moins deux rangées de blocs respectifs (7, 8), aussi bien les rainures transversales (3, 4) séparant les blocs (5, 6) les uns des autres en direction périphérique que les fines entailles (9, 10) constituées à l'intérieur des blocs (5, 6) étant inclinées par rapport à la ligne médiane (M-M), l'inclinaison des fines entailles (9, 10) et des rainures transversales (3, 4) étant sensiblement la même à l'intérieur d'une rangée de blocs (7, 8).

8. Profil de bande de roulement selon la revendication 7, caractérisé en ce que, considérant la largeur (B) de la bande de roulement, aussi bien les rainures transversales (3, 4) que les fines entailles (9, 10) des blocs (5, 6) sont continues ou sensiblement continues et disposées le long de courbes ayant la forme d'un S peu prononcé.